# EUROPEAN PATENT SPECIFICATION

(11) **EP 3 936 311 B1**
(45) Date of publication and mention of the grant of the patent: **03.12.2025**
(21) Application number: 19928805.1
(22) Date of filing: 10.05.2019
(51) Int. Cl.: B29C 65/02, B23K 26/352, B29C 45/14, B29C 65/08, B29C 65/00, B23K 26/16, B29C 65/04, B29C 65/06, B29C 65/16, B29C 65/36, B32B 15/082, B32B 15/20, B32B 27/28, B29K 305/00, B29K 705/00, B29C 37/00, B32B 3/30, B23K 13/01, B23K 20/10, B23K 20/12, B23K 103/18, B23K 103/00

(54) **METAL MEMBER FOR JOINING AND JOINED BODY**
METALLVERBINDUNGSELEMENT UND GEFÜGTE STRUKTUR
ÉLÉMENT DE JONCTION MÉTALLIQUE ET STRUCTURE ASSEMBLÉE

(43) Date of publication of application: 12.01.2022
(73) Proprietor: Resonac Corporation, Tokyo 105-7325 (JP)
(72) Inventor: YAMAZAKI, Satoru, Tagawa-shi, Fukuoka 825-0005 (JP)
(74) Representative: Hoffmann Eitle
(86) International application number: PCT/JP2019/018779
(87) International publication number: WO 2020/230197

(56) References cited:
- WO-A1-2018/092607
- WO-A1-2018/092607
- JP-A- 2014 065 288
- JP-A- 2014 065 288
- JP-A- 2016 132 131
- JP-A- 2016 132 131
- JP-A- 2017 524 554
- US-A1- 2008 070 001
- US-A1- 2017 136 668

## Description

### Technical Field

The present disclosure relates to a metal member for joining and a joined body.

### Background Art

In various formed bodies used for vehicles and the like, there have been considered, for the purpose of weight reduction, dissimilar metal joining between a steel material and a lightweight metal material such as an aluminum alloy or a magnesium alloy, dissimilar material joining between a steel material or a lightweight metal material and a resin material, and the like. Further weight reduction can be expected by joining dissimilar materials of a steel material or a lightweight metal material and a resin material.

Therefore, a method of manufacturing a new composite component by joining and integrating a metal formed body and a resin formed body has been considered. For example, as a method of increasing a processing speed and also increasing a joining strength in different directions, a method of roughening a surface of a metal formed body and a method of manufacturing a composite formed body have been proposed in which the surface of the metal formed body is roughened by continuously irradiating the surface of the metal formed body with laser light at an irradiation speed of 2,000 mm/sec or more with use of a continuous wave laser (see, for example, Patent Documents 1 and 2).

### Citation List

### Patent Documents

Patent Document 1: Japanese Patent No. 5774246
Patent Document 2: Japanese Patent No. 5701414
US2017/136668 A1 discloses features falling under the preamble of claim 1. JP 2014/065288 A, JP 2016/132131 A, and WO 2018/092607 A1 are further prior art.

### SUMMARY OF INVENTION

### Technical Problem

However, in Patent Documents 1 and 2, in a case in which the metal formed body is roughened, although a convex shape is formed at a position lower than a reference surface as the surface of the metal formed body before roughening, a convex shape is hardly formed at a position higher than the reference surface in some cases. Therefore, a sufficient anchor effect cannot be obtained, and the joining strength between the roughened metal formed body and the resin formed body or the like may be insufficient.

The present disclosure has been made in view of the above conventional circumstances, and an object of the disclosure is to provide a metal member for joining having excellent joining strength with a resin member, and a joined body obtained by joining the metal member for joining and the resin member to each other.

### Solution to Problem

The invention is defined by claim 1.

### Advantageous Effects of Invention

The disclosure can provide a metal member for joining having excellent joining strength with a resin member, and a joined body obtained by joining the metal member for joining and the resin member to each other.

### BRIEF DESCRIPTION OF DRAWINGS

Fig. 1 is a cross-sectional photograph obtained by photographing a cross section of a surface having a smooth part and an uneven part in an embodiment of a metal member for joining from a position higher than a reference surface (an electron micrograph of an uneven part of a brass test piece in Example).
Fig. 2 is a cross-sectional photograph of an uneven part in another embodiment of the metal member for joining (an electron micrograph of an uneven part of an aluminum test piece in Example).
Fig. 3 is a plan photograph of an uneven part in another embodiment of the metal member for joining.
Fig. 4 are diagrams for describing the shape of a test piece in accordance with ISO19095.
Fig. 5 is an electron micrograph of an uneven part of a copper test piece in Example.
Fig. 6 is an electron micrograph of an uneven part of an aluminum test piece in Comparative Example.

### DESCRIPTION OF EMBODIMENTS

Embodiments of the disclosure are described below in detail. The invention is set out in the appended set of claims.

In the disclosure, those numerical ranges that are expressed with "to" each denote a range that includes the numerical values stated before and after "to" as the minimum value and the maximum value, respectively.

In a set of numerical ranges that are stated stepwisely in the disclosure, the upper limit value or the lower limit value of a numerical range may be replaced with the upper limit value or the lower limit value of other numerical range. Further, in a numerical range stated in the disclosure, the upper limit or the lower limit of the numerical range may be replaced with a relevant value indicated in any of Examples.

In the disclosure, a component may include a plurality of different substances corresponding thereto. When there are plural kinds of substances that correspond to a component of a composition, the indicated content ratio or content amount of the component in the composition means, unless otherwise specified, the total content ratio or content amount of the plural kinds of substances existing in the composition.

In the disclosure, particles corresponding to a component may include a plurality of different kinds of particles. When there are plural kinds of particles that correspond to a component of a composition, the indicated particle size of the component in the composition means, unless otherwise specified, a value determined for a mixture of the plural kinds of particles existing in the composition.

In the disclosure, "(meth)acrylic" means at least one of acrylic and methacrylic.

### <Metal member for joining>

In a metal member for joining according to the disclosure, a smooth part and an uneven part are provided on one surface. When a surface of the smooth part is defined as a reference surface, the uneven part has a plurality of protrusions protruding from a position lower than the reference surface to a position higher than the reference surface, and an average height of the protrusions from the reference surface is 50 µm or more.

The metal member for joining according to the disclosure has excellent joining strength with a resin member. The reason is not clear, but is presumed as follows.

Since the uneven part has the plurality of protrusions protruding from a position lower than the reference surface to a position higher than the reference surface and the protrusions have an average height of 50 µm or more from the reference surface in the metal member for joining, when the uneven part is impregnated with a resin constituting the resin member, the resin is easily entangled with the protrusions protruding to a position higher than the reference surface even if the resin does not reach below the reference surface. As a result, it is presumed that a sufficient anchor effect can be obtained, and the metal member for joining and the resin member can be firmly joined to each other.

Hereinafter, the metal member for joining according to the disclosure will be described with reference to the drawings.

In the following embodiment, as an example of the metal member for joining, the metal member for joining according to the disclosure will be described on the basis of a metal member for joining formed by irradiating a surface of a metal member with laser light to provide an uneven part. However, a material constituting the metal member for joining, a method of manufacturing the metal member for joining, and the like are not limited.

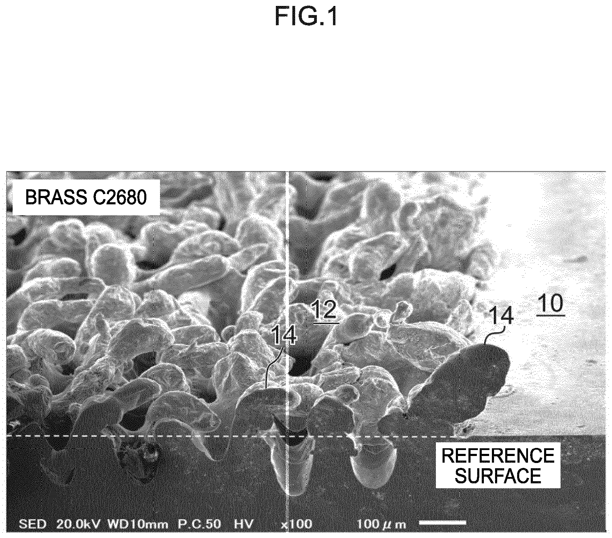

Fig. 1 is a cross-sectional photograph obtained by photographing a cross section of a surface having a smooth part and an uneven part in an embodiment of a metal member for joining from a position higher than a reference surface, and corresponds to an example of an electron micrograph of an uneven part of a brass test piece in Example 3 described later. Fig. 1 illustrates a cross section of a part including the smooth part and the uneven part on the surface having the smooth part and the uneven part. In Fig. 1, a reference surface extending over the entire surface having the smooth part and the uneven part of the metal member for joining is indicated by a dotted line.

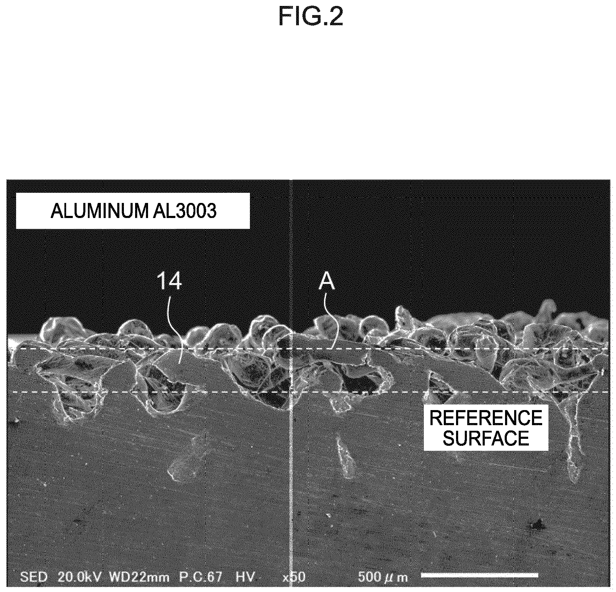

Fig. 2 is a cross-sectional photograph of an uneven part in another embodiment of the metal member for joining, and corresponds to an example of an electron micrograph of an uneven part of an aluminum test piece in Example 1 described later.

In the disclosure, the height of the protrusions from the reference surface refers to a distance between the reference surface and a surface A that is parallel to the reference surface and is in contact with a highest position of the protrusions when a cross section orthogonal to the reference surface is observed as illustrated in Fig. 2.

In the disclosure, the average height of the protrusions from the reference surface refers to an arithmetic average value of the heights of five protrusions from the reference surface obtained as described above.

As illustrated in Fig. 1, a smooth part 10 and an uneven part 12 exist on one surface of the metal member for joining. As illustrated in Fig. 1 or 2, the uneven part 12 includes a plurality of protrusions 14 protruding from a position lower than the reference surface to a position higher than the reference surface.

In the disclosure, the average height of the protrusions 14 from the reference surface is in a range of 50 µm or more.

When the average height is 50 µm or more, the joining strength between the resin member and the metal member for joining tends to increase. An upper limit of the average height is not limited, but the average height may be 1,000 µm or less in terms of productivity of the metal member for joining and reduction of damage to the metal member for joining.

The average height of the protrusions 14 from the reference surface is preferably from 50 µm to 1,000 µm, more preferably from 70 µm to 500 µm, and still more preferably from 90 µm to 200 µm.

A density of the protrusions 14 in the uneven part 12 is, according to the invention, from 5 protrusions/mm² to 50 protrusions/mm², preferably from 10 protrusions/mm² to 30 protrusions/mm², and more preferably from 10 protrusions/mm² to 25 protrusions/mm².

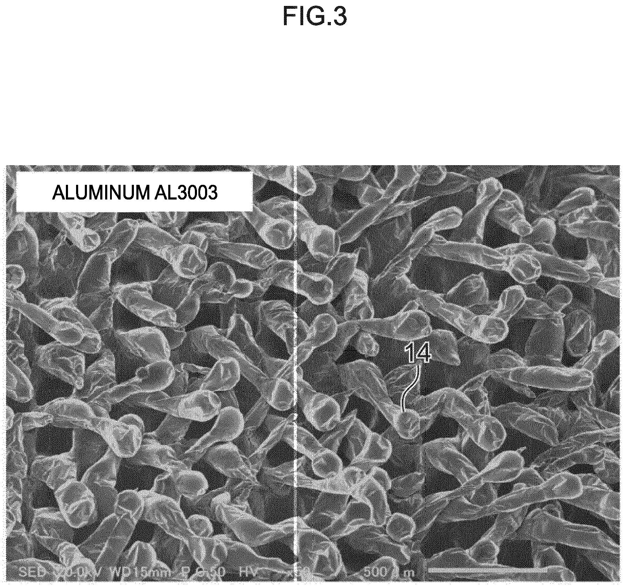

Fig. 3 is a plan photograph of an uneven part in another embodiment of the metal member for joining. As illustrated in Fig. 3, the uneven part includes the plurality of protrusions 14. At least some of the plurality of protrusions 14 have a structure in which a diameter thereof becomes smaller and then larger from a root toward a distal end. Such a structure of the protrusions 14 allows the anchor effect to be more effectively exhibited, and then the joining strength with the resin member tends to be improved.

A ratio of the protrusions having a structure in which the diameter thereof becomes smaller and then larger from a root toward a distal end is not limited. The ratio of the protrusions having a structure in which the diameter thereof becomes smaller and then larger from a root toward a distal end in all the protrusions is preferably from 50% by number to 100% by number, more preferably from 70% by number to 100% by number, and still more preferably from 90% by number to 100% by number.

A metal constituting the metal member for joining is not limited, and can be selected appropriately from known metal materials in accordance with application of the joined body formed with use of the metal member for joining. Examples of the metal constituting the metal member for joining include iron, aluminum, zinc, titanium, copper, magnesium, and alloys including these metals. Examples of the alloy include various stainless steels and copper-zinc alloys (brass).

The surface having the smooth part and the uneven part of the metal member for joining may be subjected to surface treatment such as plating treatment or alumite treatment.

A shape of the metal member for joining is not limited, and can be selected appropriately in accordance with the application of the joined body formed with use of the metal member for joining. Examples of the shape of the metal member for joining include a plate shape, a spherical shape, a shape having a curved surface, and a shape having a step.

The surface having the uneven part of the metal member for joining may be a flat surface.

A method of forming the uneven part on the metal member is not limited. Examples of the method of forming the uneven part on the metal member include a method of irradiating the surface of the metal member with laser light to provide the uneven part as described above.

Hereinafter, various conditions and the like when adopting a method of irradiating the surface of the metal member with laser light to provide the uneven part will be described.

The following various conditions are set appropriately in terms of a type of metal constituting the metal member for joining, the height of the protrusions, and the like.

In a case in which the uneven part is provided by irradiating the surface of the metal member with laser light, a pulse laser or a continuous wave (CW) laser may be used. In a case in which the CW laser is used, the CW laser may be a modulated CW laser in which power of the laser is periodically changed.

In the case in which the CW laser is used, an irradiation speed (scan speed) of the CW laser is not limited.

The irradiation speed of the CW laser is preferably from 100 mm/sec to 2,000 mm/sec.

When the irradiation speed of the CW laser is 100 mm/sec or more, a processing speed of the metal member is likely to be increased. When the irradiation speed of the CW laser is 2,000 mm/sec or less, the average height of the protrusions from the reference surface is likely to be in a range of 50 µm or more, and the joining strength with the resin member tends to be further improved.

An irradiation output of the laser is not limited.

For example, in the case in which the CW laser is used, the laser output is preferably from 300W to 2,000W.

When the laser output of the CW laser is 300W or more, the irradiation speed of the CW laser is easily increased, and the processing speed of the metal member is likely to be increased. When the laser output of the CW laser is 2,000W or less, an irradiation facility of a laser light is likely to be miniaturized.

A spot diameter of the laser is not limited.

For example, the spot diameter of the laser is preferably from 10 µm to 50 µm.

In a case in which the modulated CW laser is used, a modulation method may be a sine wave, a triangular wave, or a rectangular wave.

A frequency of the modulated CW laser is preferably from 1,000 Hz to 10,000 Hz.

In the modulated CW laser, a minimum value of the laser output when a maximum value of the laser output is 100 is preferably 30 or more but less than 100, more preferably from 50 to 95, and still more preferably from 80 to 90.

In a case in which the surface of the metal member is irradiated with laser light, the uneven part may be provided by wobbling.

The laser light may be repeatedly emitted to a part irradiated once with the laser light. In a case in which the laser light is repeatedly emitted, the number of repetitions is preferably from 1 to 40.

As the laser, a solid laser such as a ruby laser, a yttrium aluminum garnet (YAG) laser, or a titanium sapphire laser, a liquid laser such as a dye laser, a gas laser such as a helium neon laser, an argon ion laser, a carbon dioxide gas laser, a nitrogen laser, or an excimer laser, a semiconductor laser, a fiber laser, or the like can be used.

The laser may be a green laser.

When the uneven part is provided by irradiating the surface of the metal member with the laser light, compressed air may be supplied to a part irradiated with the laser light on the surface of the metal member. A pressure of the supplied compressed air is preferably from 0.2 MPa to 0.5 MPa in terms of efficiently removing metal powder generated by irradiation with the laser light.

When the laser light is linearly emitted, a scanning interval of the laser light is preferably larger than the spot diameter of the laser light.

### <Joined body>

A joined body according to the disclosure includes the metal member for joining according to the disclosure, and the resin member joined to the surface having the smooth part and the uneven part of the metal member for joining.

Since the resin member is joined to the surface having the smooth part and the uneven part of the metal member for joining, the joined body according to the disclosure has an excellent joining strength between the metal member for joining and the resin member.

A type of the resin constituting the resin member is not limited, and a conventionally known resin can be appropriately selected and used in accordance with the application of the joined body.

Examples of the resin include a thermosetting resin, a thermoplastic resin, and elastomer.

Specific examples of the thermosetting resin include a phenol resin, an unsaturated imide resin, a cyanate resin, an isocyanate resin, a benzoxazine resin, an oxetane resin, an amino resin, an unsaturated polyester resin, an allyl resin, a dicyclopentadiene resin, a silicone resin, a triazine resin, a melamine resin, a resorcinol resin, and an epoxy resin.

Specific examples of the thermoplastic resin include a polyimide resin, a polyamideimide resin, a polyamide resin, a polyetherimide resin, a polybenzoxazole resin, a polybenzimidazole resin, a polystyrene resin, an acrylonitrile-butadiene-styrene copolymer resin, an acrylonitrile-styrene copolymer resin, a polyethylene resin, a polypropylene resin, a polyvinyl chloride resin, a polyvinylidene chloride resin, a polycarbonate resin, a (meth) acrylic resin, a polyester resin, a polyacetal resin, and a polyphenylene sulfide resin.

Specific examples of the elastomer include silicone rubber, styrene-butadiene rubber (SBR), nitrile rubber (NBR), and urethane rubber.

The resin member may contain other conventionally known components other than the resin in accordance with the application of the joined body. Examples of other components include particulate fillers, fibrous fillers, and release agents.

Examples of other components further include a curing agent that cures the thermosetting resin, a curing accelerator that accelerates curing of the thermosetting resin, and a surface treatment agent that modifies a surface of an inorganic material.

The content of other components other than the resin included in the resin member may be appropriately set in accordance with the application of the joined body.

A method of manufacturing the joined body is not limited, and a normal method of molding a resin formed body can be adopted, such as an injection molding method, a blow molding method, a compression molding method, a transfer molding method, an extrusion molding method, or a cast molding method. A resin composition including a resin and, if necessary, other components may be applied to the surface provided with the uneven part, of the metal member for joining provided with the uneven part, as described above by an insert molding method to manufacture a joined body.

Furthermore, the metal member for joining provided with the uneven part may be brought into contact with the resin member, and then the metal member for joining and the resin member may be joined by ultrasonic welding, vibration welding, induction welding, high-frequency welding, laser welding, heat welding, spin welding, or the like.

The metal member for joining and the resin member may be joined by heating and softening a part of the resin member to be joined to the metal member for joining and then bringing the resin member and the metal member for joining into contact with each other while pressurizing the resin member and the metal member for joining.

In terms of preventing deformation of the protrusions in the uneven part and improving the joining strength, the joined body is preferably manufactured by the insert molding method.

In a case in which a thermosetting resin is used as a component of the resin member, the metal member for joining and the resin member may be joined by the above method, and then the resin member may be cured by heat treatment.

Examples of the applications of the joined body according to the disclosure include various formed bodies used in vehicles and the like, and specific examples thereof include a side door, a hood, a roof, a back door, a luggage door, a bumper, and a crash box, but are not limited thereto.

### Examples

Hereinafter, the disclosure will be described based on Examples, but the disclosure is not limited thereto.

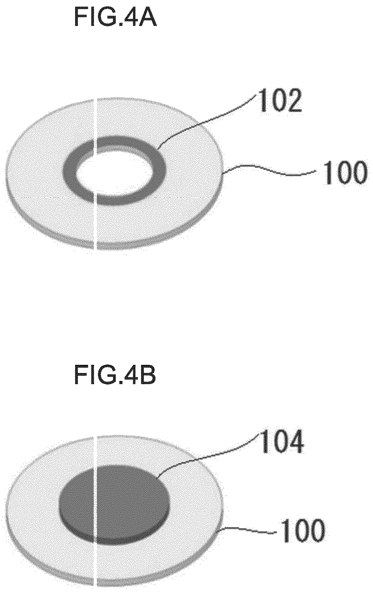

Doughnut-shaped test pieces 100 including aluminum (AL 3003), copper (C 1020), and brass (C 2680) having an outer diameter of 55 mm, an inner diameter of 20 mm, and a thickness of 2 mm in accordance with ISO19095 as illustrated in Fig. 4(A) were prepared.

On the test piece 100, an uneven part 102 was formed under the following conditions using a fiber laser (ML6811C (CW laser) manufactured by Amada Miyachi Co., Ltd.). A width of the uneven part 102 was set to 1.2 mm.

**[Table 1]**

| | Setting Value | | | | | |
|---|---|---|---|---|---|---|
| | metal | laser output | scan speed | frequency | modulated CW control | number of repetition |
| Example 1 | AL 3003 | 350 W | 1500 mm/sec | 5,000 Hz | With control | 15 |
| Example 2 | C 1020 | 450 W | 1200 mm/sec | 5,000 Hz | With control | 30 |
| Example 3 | C 2680 | 450 W | 1500 mm/sec | 5,000 Hz | With control | 20 |
| Comparative Example 1 | AL 3003 | 450 W | 1500 mm/sec | 5,000 Hz | With control | 1 |

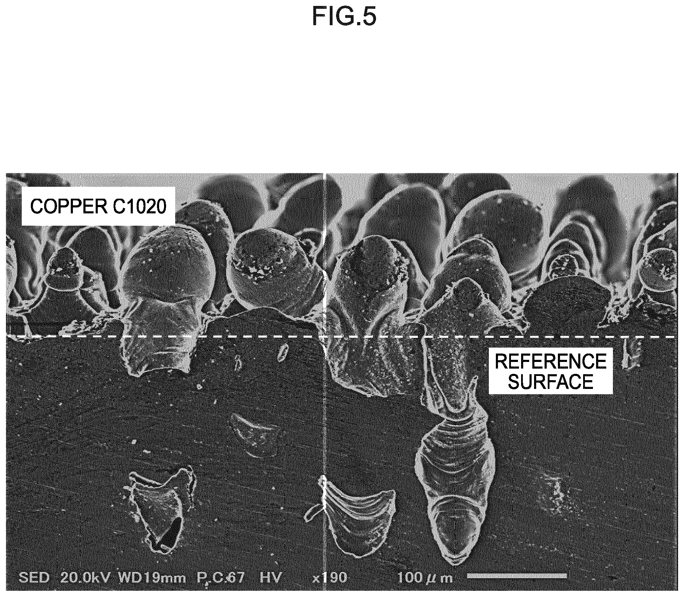

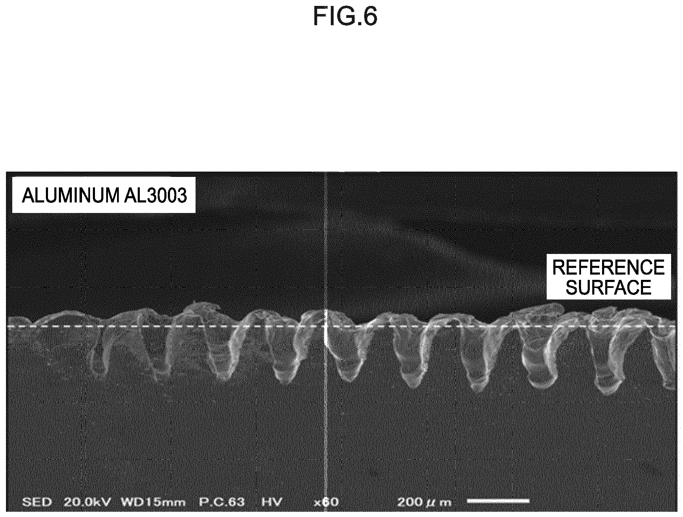

Fig. 2 illustrates an example of an electron micrograph of the uneven part of the aluminum test piece of Example 1. Fig. 5 illustrates an example of an electron micrograph of the uneven part of the copper test piece of Example 2. Fig. 1 illustrates an example of an electron micrograph of the uneven part of the brass test piece of Example 3. Fig. 6 illustrates an example of an electron micrograph of the uneven part of the aluminum test piece of Comparative Example 1.

As is apparent from Figs. 1, 2, 5, and 6, the uneven part of each test piece has the plurality of protrusions protruding from a position lower than the reference surface to a position higher than the reference surface.

The electron micrographs of the test pieces were taken at an acceleration voltage of 20 kV with use of JSM-IT100 manufactured by JEOL Ltd.

The average height of the protrusions from the reference surface in the uneven part of the aluminum test piece of Example 1 was determined as described above, and found to be 170 µm.

The average height of the protrusions from the reference surface in the uneven part of the copper test piece of Example 2 was determined as described above, and found to be 100 µm.

The average height of the protrusions from the reference surface in the uneven part of the brass test piece of Example 3 was determined as described above, and found to be 110 µm.

The average height of the protrusions from the reference surface in the uneven part of the aluminum test piece of Comparative Example 1 was determined as described above, and found to be 40 µm.

Subsequently, a resin part 104 as illustrated in Fig. 4(B) was injection-molded under the conditions of a resin heating temperature of 210°C and a mold temperature of 80°C with use of an injection molding machine LA60 manufactured by Sodick Co., Ltd. to cover the uneven part of each test piece provided with the uneven part. A size of the resin part 104 was 26 mm in outer diameter and 2 mm in thickness. As the resin, a polyacetal (POM) resin (standard grade M90-44) manufactured by Polyplastics Co., Ltd. was used.

The joining strength was evaluated by the following method with use of each test piece provided with the resin part. Five test pieces for evaluation of the joining strength were prepared for each of Examples and Comparative Examples.

### Evaluation Method

AG-5kNIS manufactured by SHIMADZU CORPORATION was used to perform a tensile test at a test speed of 5 mm/min, the joining strength of five joined bodies was determined, and the average value thereof was calculated.

In the joining with the POM resin, the joining strength for each test piece was as follows.

The average value of the joining strength of the aluminum test piece of Example 1 was 17.8 MPa.

The average value of the joining strength of the copper test piece of Example 2 was 14.7 MPa.

The average value of the joining strength of the brass test piece of Example 3 was 22.4 MPa.

The average value of the joining strength of the aluminum test piece of Comparative Example 1 was 0 MPa.

### Reference Signs List

10 Smooth part
12 Uneven part
14 Protrusion
100 Test piece
102 Uneven part
104 Resin part

## Claims

1. A metal member for joining comprising a smooth part (10) and an uneven part (12) on one surface of the metal member for joining, wherein when
a surface of the smooth part (10) is defined as a reference surface, the uneven part (12) has a plurality of protrusions (14) protruding from a position lower than the reference surface to a position higher than the reference surface, and
the plurality of protrusions (14) have an average height of 50 µm or more from the reference surface,
wherein at least some of the plurality of protrusions (14) have a structure in which a diameter thereof becomes smaller and then larger from a root toward a distal end,
the average height of the protrusions (14) from the reference surface referring to an arithmetic average value of the heights of five protrusions from the reference surface, the height of the protrusions (14) from the reference surface referring to a distance between the reference surface and a surface (A) that is parallel to the reference surface and is in contact with a highest position of the protrusions (14) when a cross section orthogonal to the reference surface is observed,
wherein in the uneven part (12), a density of the protrusions (14) is from 5
protrusions/mm² to 50 protrusions/mm².

2. A metal member according to claim 1, wherein the protrusions (14) have been provided by a continuous wave laser.

3. A joined body comprising:
The metal member for joining according to claim 1 or 2; and
a resin member (104) joined to a surface of the metal member for joining, the surface comprising the smooth part (10) and the uneven part (12).

## Patentansprüche

1. Metallverbindungselement, das einen glatten Teil (10) und einen unregelmäßigen Teil (12) auf einer Oberfläche des Metallverbindungselements umfasst, wobei, wenn
eine Oberfläche des glatten Teils (10) als eine Bezugsoberfläche definiert ist, der unregelmäßige Teil (12) eine Vielzahl von Vorstehenden (14) aufweist, die von einer Position, die niedriger als die Bezugsoberfläche ist, zu einer Position, die höher als die Bezugsoberfläche ist, vorstehen, und
die Vielzahl von Vorsprüngen (14) eine durchschnittliche Höhe von 50 µm oder mehr von der Bezugsoberfläche aufweist,
wobei mindestens einige der Vielzahl von Vorsprüngen (14) eine Struktur aufweisen, in der ein Durchmesser davon von einer Wurzel zu einem distalen Ende hin kleiner und dann größer wird, wobei sich die durchschnittliche Höhe der Vorsprünge (14) von der Bezugsoberfläche auf einen arithmetischen Durchschnittswert der Höhen von fünf Vorsprüngen von der Bezugsoberfläche bezieht,
wobei sich die Höhe der Vorsprünge (14) von der Bezugsoberfläche auf einen Abstand zwischen der Bezugsoberfläche und einer Oberfläche (A) bezieht, die parallel zu der Bezugsoberfläche ist und in Kontakt mit einer höchsten Position der Vorsprünge (14) steht, wenn ein Querschnitt orthogonal zu der Bezugsoberfläche betrachtet wird,
wobei im unregelmäßigen Teil (12) eine Dichte der Vorsprünge (14) von 5 Vorsprüngen/mm² bis 50 Vorsprüngen/mm² beträgt.

2. Metallelement nach Anspruch 1, wobei die Vorsprünge (14) mit einem Dauerstrichlaser bereitgestellt wurden.

3. Gefügte Struktur, umfassend:
das Metallverbindungselement nach Anspruch 1 oder 2; und
ein Harzelement (104), das mit einer Oberfläche des Metallverbindungselements verbunden wurde, wobei die Oberfläche den glatten Teil (10) und den unregelmäßigen Teil (12) umfasst.

## Revendications

1. Élément de jonction métallique comprenant une partie lisse (10) et une partie irrégulière (12) sur une surface de l'élément de jonction métallique, dans lequel quand
une surface de la partie lisse (10) est définie comme surface de référence, la partie irrégulière (12) présente une pluralité de saillies (14) faisant saillie depuis une position plus basse que la surface de référence vers une position plus élevée que la surface de référence, et
la pluralité de saillies (14) présentent une hauteur moyenne de 50 µm ou plus depuis la surface de référence,
dans lequel au moins certaines de la pluralité de saillies (14) présentent une structure dans laquelle un diamètre de celle-ci devient plus petit puis plus grand depuis une base vers une extrémité distale, la hauteur moyenne des saillies (14) depuis la surface de référence se référant à une valeur moyenne arithmétique des hauteurs de cinq saillies depuis la surface de référence, la hauteur des saillies (14) depuis la surface de référence se référant à une distance entre la surface de référence et une surface (A) qui est parallèle à la surface de référence et est en contact avec une position la plus élevée des saillies (14) quand une section transversale orthogonale à la surface de référence est observée,
dans lequel, dans la partie irrégulière (12), une densité des saillies (14) va de 5 saillies/mm² à 50 saillies/mm².

2. Élément métallique selon la revendication 1, dans lequel les saillies (14) ont été créées par un laser à onde continue.

3. Corps joint, comprenant :
l'élément de jonction métallique selon la revendication 1 ou la revendication 2 ; et
un élément en résine (104) joint à une surface de l'élément de jonction métallique, la surface comprenant la partie lisse (10) et la partie irrégulière (12).
